# EUROPÄISCHE PATENTSCHRIFT

(11) **EP 2 885 240 B1**
(45) Veröffentlichungstag und Bekanntmachung des Hinweises auf die Patenterteilung: **01.11.2017**
(21) Anmeldenummer: 13744437.8
(22) Anmeldetag: 27.07.2013
(51) Int. Cl.: B67C 7/00

(54) **TRANSPORTSTERN FÜR BEHÄLTER, BEHÄLTERTRANSPORTSTRECKE SOWIE ANLAGE ZUM BEHANDELN VON BEHÄLTERN**
TRANSPORT STAR FOR CONTAINERS, CONTAINER TRANSPORT SECTION, AND SYSTEM FOR HANDLING CONTAINERS
SYSTÈME DE TRANSPORT EN ÉTOILE POUR CONTENANTS, PARCOURS DE TRANSPORT DE CONTENANTS ET INSTALLATION DE TRAITEMENT DE CONTENANTS

(30) Priorität: 15.08.2012 DE 102012016124
(43) Veröffentlichungstag der Anmeldung: 24.06.2015
(73) Patentinhaber: KHS GmbH, 44143 Dortmund (DE)
(72) Erfinder: BRUCH, Bernd, 55595 Weinsheim (DE); CLÜSSERATH, Ludwig, 55543 Bad Kreuznach (DE)
(86) Internationale Anmeldenummer: PCT/EP2013/002230
(87) Internationale Veröffentlichungsnummer: WO 2014/026732

(56) Entgegenhaltungen:
- WO-A1-2005/056465
- WO-A1-2009/009681
- DE-A1- 4 219 082
- DE-U1- 9 311 106
- DE-U1- 29 906 070

## Beschreibung

Die Erfindung bezieht sich auf einen Transportstern gemäß Oberbegriff Patentanspruch 1, auf eine Behältertransportstrecke mit einem derartigen Transportstern sowie auf eine Anlage zum Behandeln von Behältern mit einer derartigen Behältertransportstrecke. Es ist bekannt (DE 103 41 965 A1), Behälter während ihres Füllens in einem gegenüber der Umgebung durch eine Einhausung getrennten Raum anzuordnen und in diesem Raum mit einem von oben nach unten gerichteten laminaren Strom aus steriler Luft zu beaufschlagen, um eine Kontaminierung der Behälter durch Fremdpartikel, beispielsweise Staub, durch Keime oder durch andere unerwünschte Stoffe zu vermeiden.

Bekannt sind auch Transportstrecken zwischen Behälterbehandlungsmaschinen oder -aggregaten zum Transportieren der Behälter von einer Behandlungsmaschine in eine in einer Behältertransportrichtung nachfolgende Behälterbehandlungsmaschine einer Anlage. Nachteilig hierbei ist u.a., dass die leeren oder gefüllten und noch nicht verschlossenen Behälter während dieses Transportes z.B. an eine oder von einer Füllmaschine gegen eine Kontamination ungeschützt sind. Aus der WO 2009/009681 A1 ist ein Transportstern gemäß dem Oberbegriff des Anspruchs 1 bekannt.

Aufgabe der Erfindung ist es, einen Transportstern zur Bildung einer Behältertransportstrecke aufzuzeigen, der eine Kontamination der Behälter während ihres Transportes auf der Behältertransportstrecke sowie auch an der Übergabe an die und bei der Abnahme von der Behältertransportstrecke vermeidet.

Zur Lösung dieser Aufgabe ist ein Transportstern entsprechend dem Patentanspruch 1 ausgebildet. Eine Behältertransportstrecke ist Gegenstand des Patentanspruches 11. Eine Anlage zum Behandeln von Behältern ist Gegenstand des Patentanspruches 12. Die Austrittsöffnungen für das sterile dampf- und/oder gasförmige Medium, welches nachstehend als steriles Fluid bezeichnet wird und vorzugsweise sterile Luft ist, bilden ein vorzugsweise mit dem Transportstern bzw. mit dessen Rotor umlaufendes Laminarströmungs- oder -flowsystem, mit dem die Behälter auch dann beaufschlagt werden, wenn diese mit dem Transportstern bzw. auf der Behältertransportstrecke transportiert werden. Das Laminarströmungssystem setzt sich bei Anlagen zum Behandeln von Behältern vorzugsweise auch in den Behälterbehandlungsmaschinen oder -aggregaten fort, so dass die Behälter zur Vermeidung von Kontaminationen zumindest überall dort, wo sie beim Transport und/oder bei der Behandlung noch nicht verschlossen sind, mit der laminaren Strömung des sterilen Fluids beaufschlagt werden.

Bei einer bevorzugten Ausführungsform ist die wenigstens eine Behältertransportstrecke Bestandteil einer Anlage zum Füllen und Verschließen von Behältern, die in der Anlage durch eine Blasformmaschine oder durch ein entsprechendes Aggregat aus Vorformlingen durch Blasformen hergestellt werden. Die Behältertransportstrecke zwischen dieser Blasformmaschine und einer in Behältertransportrichtung folgenden Füllmaschine oder einem entsprechenden Füllaggregat sowie auch die Behältertransportstrecke zwischen der Füllmaschine und einer in der Behältertransportrichtung folgenden Verschließmaschine bzw. einem entsprechenden Aggregat sind jeweils von wenigstens einem Transportstern mit dem Laminarströmungssystem gebildet. Dieses setzt sich auch in den Behandlungsmaschinen oder -aggregaten fort, sodass die offenen Behälter zumindest ab der Übernahme aus der Blasformmaschine bis in die Verschließmaschine konsequent unter einer sich mit den Behältern mitbewegenden laminaren Strömung des sterilen Fluids stehen und hierdurch eine Kontamination der Behälter auf jeden Fall bis zu ihrem Verschließen wirksam unterbunden ist.

Da die Austrittsöffnungen für das sterile Fluid bzw. für die Erzeugung der laminaren Strömung dieses Fluids an der mit dem Rotor des Transportsternes umlaufenden Blende in Form eines Loch- oder Laminatorblechs vorgesehen sind, ist es nicht erforderlich, diese Blende "vollflächig" mit Austrittsöffnungen zu versehen. Dazu wird erfindungsgemäß vorgeschlagen, die Austrittsöffnungen auf die Transportpositionen zu konzentrieren, und zwar bevorzugt derart, dass sie dort Gruppen von jeweils mehreren Austrittsöffnungen bilden, die dann vorzugsweise in einer Ringstruktur um die parallel zur Maschinenachse orientierte Achse der betreffenden Transportposition angeordnet sind.

Durch die Anordnung der Austrittsöffnungen nur an den Transportpositionen ergibt sich u.a. eine erhebliche Reduzierung des Verbrauchs an dem sterilen Medium, dessen Strömung während des Betriebes einer den Transportstern oder die Behältertransportstrecke aufweisenden Anlage permanent aufrechterhalten wird. Bei einer Fortsetzung Laminarströmungssystem in den Behälterbehandlungsmaschinen oder -aggregaten ist auch dort bevorzugt jeweils eine mit einem umlaufenden Transportelement (Rotor) mitbewegte Blende vorgesehen, die nur an Behälterbehandlungspositionen Austrittsöffnungen für das sterile Fluid aufweist.

"Behandlungsmaschinen" sind im Sinne der Erfindung Maschinen, Vorrichtungen oder Aggregate zum Herstellen und Behandeln von Behältern, insbesondere zum Blasformen, Sterilisieren, Füllen und Verschließen von Behältern. Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Der Ausdruck "Steril" bedeutet im Sinne der Erfindung, dass das als steril bezeichnete Fluid oder Medium entweder keine Keime und/oder Schmutzpartikel enthält, oder aber der Ausdruck "steril" bedeutet, dass das als steril bezeichnete Medium nur so wenige Keime und/oder Schmutzpartikel und nur solche Keime und/oder Schmutzpartikel enthält, dass unter der Berücksichtigung der Eigenschaften des Füllgutes keine schädigenden Auswirkungen auf das Füllgut zu erwarten sind.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

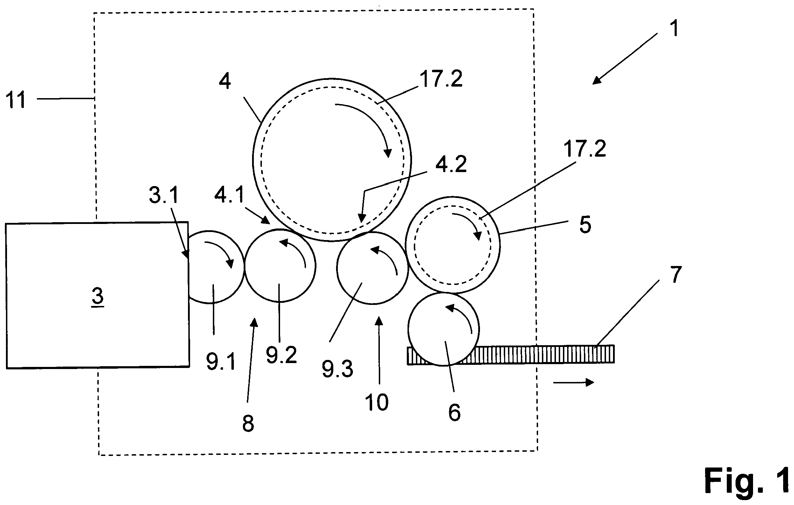

- Fig. 1: in schematischer Darstellung und in Draufsicht eine Anlage zum Blasformen von Behältern in Form von Kunststoffflaschen sowie zum Füllen und Verschließen dieser Flaschen unter sterilen Bedingungen;
- Fig. 2: in vereinfachter perspektivischer Darstellung zwei in Transportrichtung der Behälter aneinander anschließende Transportsterne einer Behältertransportstrecke der Anlage der Figur 1;
- Fig. 3: in schematischer Darstellung und im Schnitt die beiden Transportsterne der Figur 2;
- Fig. 4: die beiden Transportsterne der Figur 2 in Draufsicht;
- Fig. 5: in vereinfachter perspektivischer Darstellung zwei in Behältertransportrichtung aneinander anschließende Transportsterne bei einer weiteren Ausführungsform der Erfindung;
- Fig. 6: einen Vertikalschnitt durch einen der beiden Transportsterne der Figur 5;
- Fig. 7 u. 8die: beiden Transportsterne der Figur 5 in perspektivischer Darstellung und in Unteransicht in unterschiedlichen Betriebszuständen;
- Fig. 9: eine Teildarstellung ähnlich Figur 6 bei einer weiteren Ausführungsform.

Die in den Figuren allgemein mit 1 bezeichnete Anlage dient zum Blasformen, Füllen und Verschließen von Behältern 2 in Form von Kunststoff- oder PET-Flaschen unter sterilen Bedingungen. Die Anlage 1 umfasst hierfür eine Blasformmaschine 3, in der die Behälter 2 unter Verwendung von Vorformlingen durch Blasen hergestellt werden, eine Füllmaschine 4 zum Füllen der Behälter 2 mit dem flüssigen Füllgut sowie eine Verschließmaschine 5 zum Verschließen der gefüllten Behälter 2, die dann über einen anschließenden Transportstern 6 an einen äußeren Transporteur 7 weitergeleitet werden. Die Blasformmaschine 3, die Füllmaschine 4 und die Verschließmaschine 5 sind beispielsweise auch verblockte Aggregate einer Gesamtmaschine.

In einer Behältertransportrichtung zwischen der Blasformmaschine 3 bzw. dem dortigen Behälterauslauf 3.1 und der Füllmaschine 4 bzw. dem dortigen Behältereinlauf 4.1 ist eine Behältertransportstrecke 8 vorgesehen, die bei der dargestellten Ausführungsform von zwei jeweils um eine vertikale Maschinenachse MA1 bzw. MA2 gegenläufig umlaufend angetriebenen rotorartigen Transportsternen 9.1 und 9.2 gebildet ist. Zum Weiterleiten der gefüllten Behälter 2 von der Füllmaschine 4 bzw. deren Behälterauslauf 4.2 an die Verschließmaschine 5 ist eine Behältertransportstrecke 10 vorgesehen, die bei der dargestellten Ausführungsform lediglich von einem um eine vertikale Maschinenachse MA3 umlaufend angetriebenen Transportstern 9.3 gebildet ist.

Zumindest die Transportsterne 9.1, 9.2 und 9.3 sind vorzugsweise jeweils identisch ausgebildet. Weiterhin sind die Blasformmaschine 3, die Füllmaschine 4, die Verschließmaschine 5 und die Transportsterne 6 und 9.1 - 9.3 bevorzugt in einer einen sterilen Raum zur Umgebung hin trennenden Einhausung 11 aufgenommen.

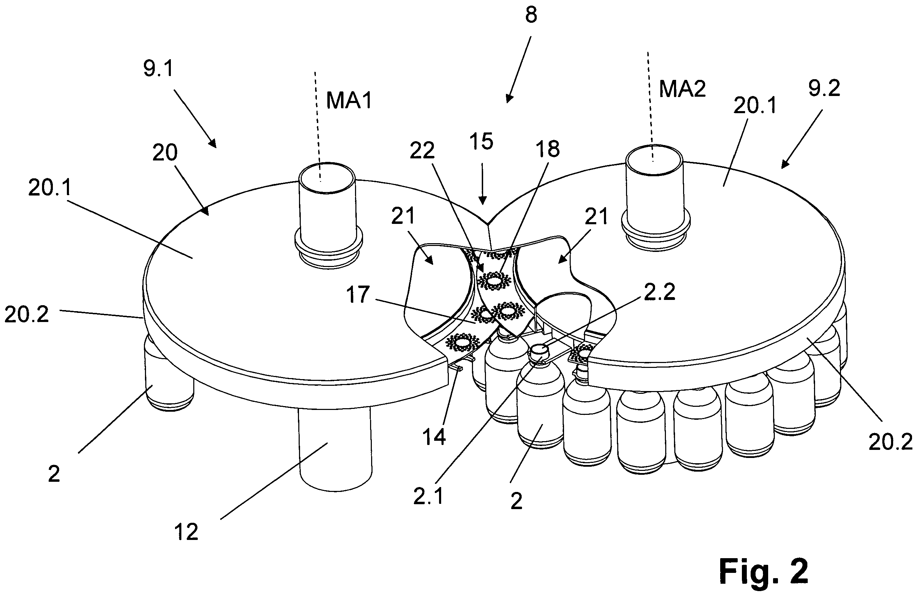

Die Figuren 2 - 4 zeigen die beiden die Behältertransportstrecke 8 bildenden Transportsterne 9.1 und 9.2 näher im Detail. Diese bestehen jeweils aus einem um die zugehörige vertikale Maschinenachse MA1 bzw. MA2 umlaufend angetriebenen und an einer vertikalen Säule 12 drehbar gelagerten, beispielsweise speichenradartigen Rotor 13, an dessen Umfang in gleichmäßigen Winkelabständen um die Maschinenachse MA1 bzw. MA2 verteilt und in demselben radialen Abstand von dieser Maschinenachse als Behälterträger zangenartige Greifer oder Halteklammern 14 vorgesehen sind, und zwar zum hängenden Halten jeweils eines Behälters 2 an seinem Behälterhals 2.1 unmittelbar unterhalb der Behältermündung 2.2 bzw. an einem dort vorgesehenen Halsring (Neckring).

Um ein "Kämmen" der Rotoren 13 der beiden Transportsterne 9.1 und 9.2 im Bezug auf ihre Klammern 14 und damit eine Übergabe der Behälter 2 von dem Transportstern 9.1 an den Transportstern 9.2 zu ermöglichen, sind die Rotoren 13 dieser Transportsterne nicht nur synchron und gegenläufig angetrieben, sondern die Klammern 14 des Transportsternes 9.1 befinden sich auch in einer anderen horizontalen Ebene als die Klammern 14 des Transportsternes 9.2, d.h. bei der dargestellten Ausführungsform sind die Klammern 14 des Transportsternes 9.1 in einer horizontalen Ebene angeordnet, die etwas unterhalb der horizontalen Ebene der Klammern 14 des Transportsternes 9.2 liegt.

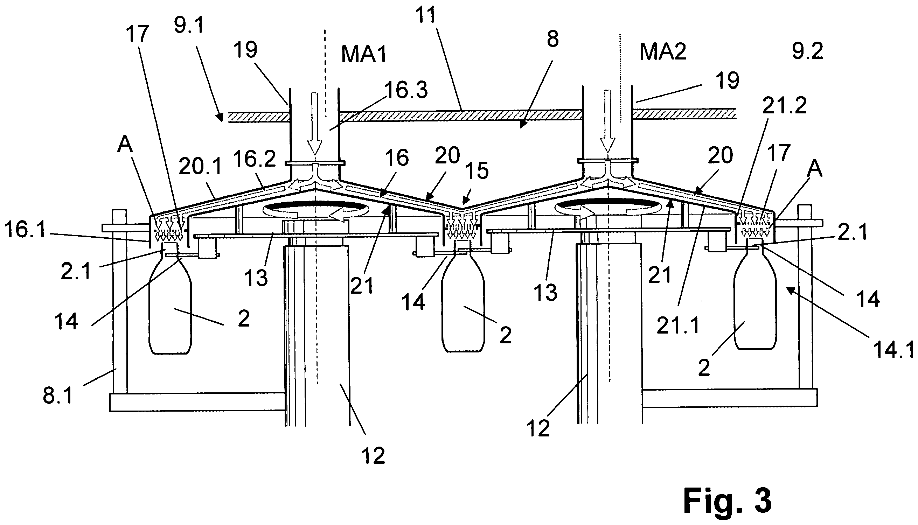

Um einen Transport der Behälter 2 entlang der Behältertransportstrecke 8 unter sterilen Bedingungen zu erreichen, d.h. insbesondere ein Eindringen von Fremdpartikeln bzw. von Schmutz und/oder von Keimen in die steril in der Blasformmaschine 3 hergestellten Behälter 2 zu vermeiden, werden diese während des Transportes entlang der Behältertransportstrecke 8 in einem Laminarströmungssystem ständig mit einem von oben nach unten gerichteten laminaren Strömung eines sterilen Fluids, beispielsweise mit einer laminaren Strömung aus steriler Luft beaufschlagt, wie dies in der Figur 3 mit den Pfeilen A angedeutet ist. Zum Zuführen und Verteilen des sterilen Fluids ist ein Kanal 16 vorgesehen, der mit einem Kanalabschnitt 16.1 oberhalb der Bewegungsbahn der Behälter 2 oder Klammern 14 einen die jeweilige Maschinenachse MA1 bzw. MA2 ringförmig umschließenden Ringraum bildet, in den die an dem betreffenden Transportstern 9.1 bzw. 9.2 bzw. an den dortigen Klammern 14 gehaltenen Behälter 2 mit ihrer oberen Behälterbereich 2.1 und der Behälteröffnung 2.2 hineinreichen und in dem oberhalb der Bewegungsbahn der Behälteröffnungen 2.2 eine Blende in Form eines Lochbleches oder Laminatorblech 17 angeordnet ist, welches eine Vielzahl von Austrittsöffnungen 18 für das sterile Fluid aufweist.

Der Kanal 16 bildet weiterhin einen Kanalabschnitt 16.2 und einen Kanalabschnitt 16.3, über den das sterile Fluid während des Betriebes permanent zugeführt wird und der achsgleich mit der jeweiligen Maschinenachse MA1 bzw. MA2 angeordnet ist. Der Kanalabschnitt 16.3 ist im Wesentlichen von einem Rohr 19 gebildet. Der sich radial zur Maschinenachse MA1 bzw. MA2 und ausgehend von dieser Maschinenachse schräg nach unten erstreckende Kanalabschnitt 16.2 ist zwischen einem oberen haubenartigen Wandelement 20 und einem unteren, ebenfalls haubenartigen Wandelement 21 gebildet, welches mit dem betreffenden Rotor 13 verbunden ist. Die beiden haubenartigen und am Übergabebereich 15 in einander übergehenden oder mit einander verbundenen sowie an einem Maschinengestell 8.1 der Behältertransportstrecke 8 gehaltenen Wandelemente 20 bestehen jeweils aus einem oberen, im Bezug auf die betreffende Maschinenachse MA1 bzw. MA2 kegelartig ausgeführten Wandabschnitt 20.1, der bezogen auf die Maschinenachse MA1 bzw. MA2 innen liegend in das den Kanalabschnitt 16.3 bildende Rohr 19 übergeht, sowie aus einem die betreffende Maschinenachse MA1 bzw. MA2 ringförmig umschließenden, nach unten wegstehenden Wandabschnitt 20.2, der am Übergabebereich 15 sowie am Behälter Einlauf und Behälterauslauf der Behältertransportstrecke 8 unterbrochen ist. Jedes untere Wandelement 21 umfasst einen bezogen auf die jeweilige Maschinenachse MA1 bzw. MA2 kegelförmigen Wandabschnitt 21.1 und einen diese Maschinenachse kreisringförmig umschließenden und nach unten gerichteten Wandabschnitt 21.2, der zusammen mit dem Wandabschnitt 20.2 den jeweiligen Kanalabschnitt 16.1 seitlich begrenzen. An dem Wandabschnitt 21.2 ist das kreisringförmige Laminatorblech 17 befestigt ist, sodass dieses ebenso wie das Wandelement 21 mit dem betreffenden Rotor 13 umläuft.

Die beiden Laminatorbleche 17 der Transportsterne 9.1 und 9.2 sind wiederum in unterschiedlichen horizontalen Ebenen angeordnet, und zwar bei der dargestellten Ausführungsform das Laminatorblech 17 des Transportsternes 9.2 in einer Ebene oberhalb der Ebene des Laminatorblechs 17 des Transportsternes 9.1, sodass die beiden Laminatorbleche 17 am Übergabebereich 15 in vertikaler Richtung übereinander angeordnet sich aneinander vorbeibewegen können.

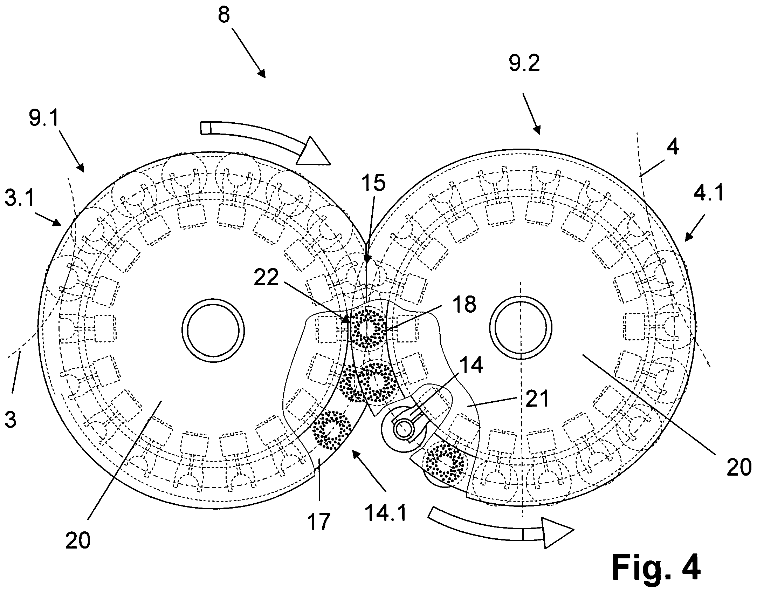

Wie insbesondere die Figuren 2 und 4 zeigen, sind die Austrittsöffnungen 18 ausschließlich oder im Wesentlichen ausschließlich nur dort vorgesehen, wo jeweils eine, eine Klammer 14 aufweisende Behältertransportposition 14.1 gebildet ist. Im Detail sind die Austrittsöffnungen 18 weiterhin so angeordnet, dass diese an jeder Transportposition 14.1 eine ringförmige und siebartig ausgebildete Anordnung oder Gruppe 22 aus einer Vielzahl von Austrittsöffnungen 18 bilden, wobei jede Gruppe 22 eine parallel zur Maschinenachse MA1 bzw. MA2 orientierte Achse der Transportposition 14.1 ringartig umschließt, in der (Achse) auch der an der Transportposition 14.1 gehaltene Behälter 2 mit seiner Achse angeordnet ist.

Jede Gruppe 22 ist weiterhin so ausgeführt, dass das durch die Austrittsöffnungen 18 austretende sterile Fluid zumindest hauptsächlich entlang der Außenfläche des betreffenden Behälters 2 von oben nach unten fließt und nicht oder im Wesentlichen nicht in den Innenraum des Behälters 2 gelangt. Die Ausbildung der Gruppen 22 ist auch weiterhin so getroffen, dass immer dann, wenn die Transportpositionen 14.1 die Übergabeposition 15 erreichen dort die Austrittsöffnungen 18 der beiden Laminatorbleche 17 deckungsgleich oder im Wesentlichen deckungsgleich angeordnet sind, sodass ein ungehindertes Ausströmen des sterilen Fluids von oben nach unten möglich ist.

Der Transportstern 9.3 ist in gleicher Weise wie der Transportstern 9.1 oder 9.2 ausgebildet. Sofern die Behältertransportstrecke 10 aus mehreren, in der Behältertransportrichtung aufeinander folgenden Transportsternen besteht, schließen diese entsprechend den Transportsternen 9.1 und 9.2 an einander an.

Vorstehend wurde davon ausgegangen, dass die Behältertransportstrecke 8 lediglich aus zwei in Behältertransportrichtung aufeinander folgenden Transportsterne 9.1 und 9.2 besteht. Es sind auch Ausführungen möglich, bei denen die entsprechende Behältertransportstrecke von drei oder aber mehr als drei in Behältertransportrichtung aneinander anschließenden Transportsternen gebildet ist. In diesem Fall schließt dann in Behältertransportrichtung an einem weiteren Übergabebereich 15 an den Transportstern 9.2 ein weiterer Transportstern 9.1, an diesen beispielsweise ein weiterer Transportstern 9.2 usw. an.

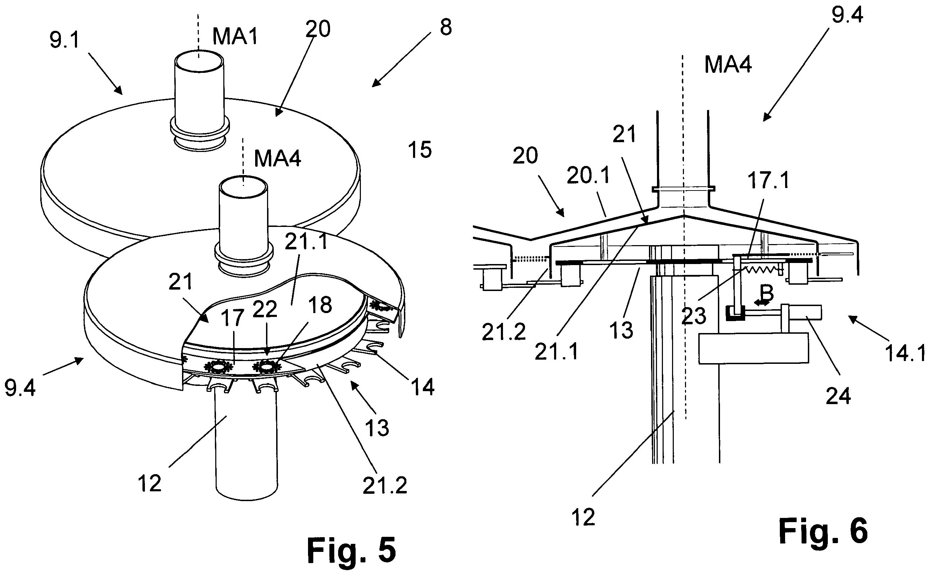

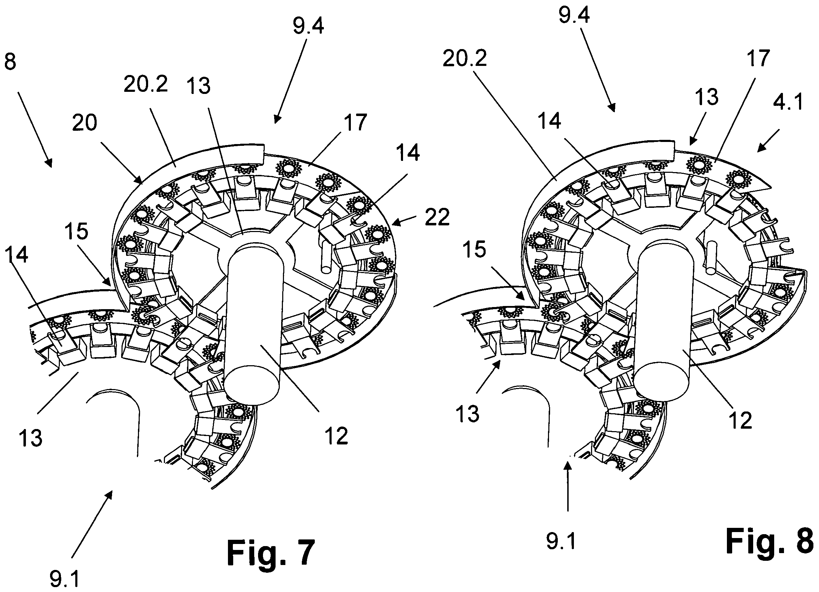

Die Figuren 5 - 8 zeigen als weitere Ausführungsform eine Behältertransportstrecke 8, die aus den beiden in der Behältertransportrichtung aufeinander folgenden und aneinander anschließenden Transportsternen 9.1 und 9.4 besteht, wobei sich der Transportstern 9.4, der beispielsweise den Behältereinlauf einer Behälterbehandlungsmaschine, z.B. der Füllmaschine 4 bildet, von dem Transportstern 9.2 dadurch unterscheidet, dass das Laminatorblech 17 aus mehreren Segmenten 17.1 besteht, die jeweils radial zur vertikalen Maschinenachse MA4 des Transportsternes 9.4 bewegbar sind, und zwar zwischen einer ersten äußeren Position, die die Normalposition ist und in der sich die Öffnungen 18 bzw. deren Gruppen 22 oberhalb der zugehörigen Transportpositionen 14.1 im Kanalabschnitt 16.1 befinden, und einer zweiten Position, in der das jeweilige Segment 17.1 bezogen auf die Maschinenachse MA4 soweit radial nach innen bewegt ist, dass sich das Segment 17.1 mit den Öffnungen 18 bzw. deren Gruppen 22 außerhalb des Kanalabschnittes 16.1 und innerhalb des ringförmigen Wandabschnittes 21.2 befindet, wie dies mit dem Doppelpfeil B angedeutet ist. Die Segmente 17.1 sind bei der dargestellten Ausführungsform durch Federmittel 23 in die äußere Position vorgespannt. Das Bewegen des jeweiligen Segmentes 17.1 in die innere Position erfolgt beispielsweise mit einem Stellglied oder Betätigungselement 24, welches beispielsweise ein Pneumatikzylinder ist, mit einem am Segment 17.1 vorgesehenen Mitnehmer 25 zusammenwirkt und sich beispielsweise im Bereich der Behälterübergabe 4.1 zwischen dem Transportstern 9.4 und der Füllmaschine 4 befindet. Der Rotor 13 wird hierfür mit dem treffenden Segment 17.1 in die Winkelposition gedreht, in der das Betätigungselement 24 angeordnet ist, und in dieser Winkelposition angehalten, sodass mit dem Betätigungselement 24 dann das Segment 17.1 in die innere Position bewegt werden kann. Durch diese besondere segmentierte Ausgestaltung des Laminatorblechs 17 ergeben sich u.a. Vorteile bei der Reinigung und/oder Desinfizierung des Transportsternes 9.4 sowie anschließender Komponenten der Anlage 1, beispielsweise der Füllmaschine 4. So würde beispielsweise bei einer CIP-Reinigung und/oder CIP-Sterilisation der Füllmaschine 4 im Bereich der Behälterübergabe 4.1 von der Behältertransportstrecke 8 an die Füllmaschine 4 das Laminatorblech 17 möglicherweise mit an Füllelementen der Füllmaschine 4 für die CIP-Reinigung und/oder CIP-Sterilisation vorgesehenen Spülkappen oder anderen Verschlüssen kollidieren. Dies wird dann durch das Bewegen des betreffenden, an der Behälterübergabe 4.1 zwischen dem Transportstern 9.4 und der Füllmaschine 4 angeordneten Segment 17.1 vermieden.

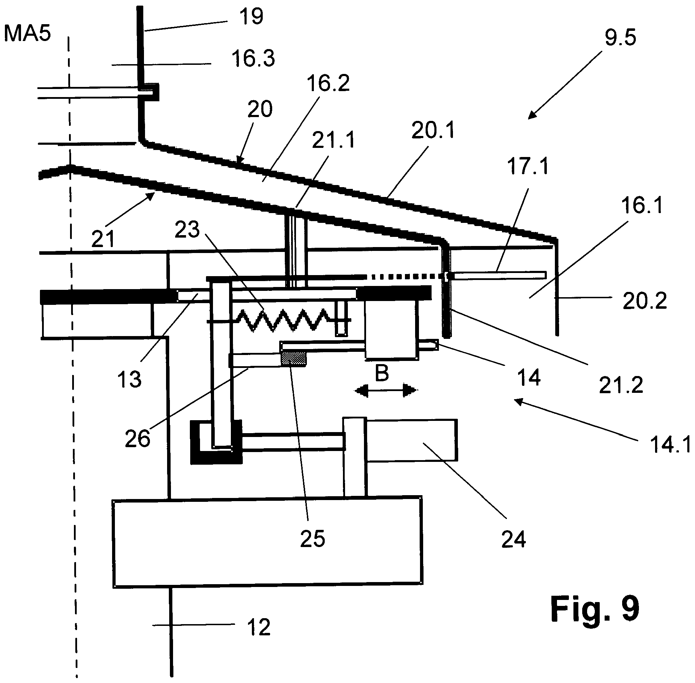

Die Figur 9 zeigt als weitere mögliche Ausführungsform einen Transportstern 9.5, der sich von dem Transportstern 9.4 dadurch unterscheidet, dass neben dem jeweiligen Segment 17.1 auch die diesem Segment zugeordneten Klammern 14 bezogen auf die Maschinenachse MA 5 zwischen einer äußeren Position (Normalposition) und einer inneren Position bewegbar sind, in der sich die Klammern 14 unterhalb des Wandelementes 21 befinden, wie dies wiederum mit dem Doppelpfeil B angedeutet ist. Die Klammern 14 sind hierfür beispielsweise bezogen auf die Maschinenachse MA5 radial am Rotor 13 verschiebbar geführt und über ein Ringsegment 26 und Gestänge 27 mit dem Mitnehmer 25 antriebsmäßig verbunden. Mehr im Detail, kann vorgesehen sein, dass die jeweiligen Segmente 17.1 und die zugeordneten Klammern 14 nur gemeinsam, oder aber auch unabhängig voneinander bewegt werden können.

Bei einer bevorzugten Ausführungsform der Erfindung setzt sich das Laminarströmungssystem auch in der jeweiligen Behälterbehandlungsmaschine, d.h. in der Blasformmaschine 3, in der Füllmaschine 4 und in der Verschließmaschine 5 fort, so dass die Behälter 2 von ihrer Herstellung bis zum Verschließen permanent mit der Strömung des sterilen Fluids von oben nach unten beaufschlagt werden. Hierfür ist auch bei der Blasformmaschine 3, bei der Füllmaschine 4 und bei der Verschließmaschine 5 oberhalb der Behälter 2 zumindest jeweils eine Blende 17.2 vorgesehen, die z.B. dem Laminatorblech 17 entspricht, mit einem umlaufenden Transportelement oder Rotor der Behälterbehandlungsmaschine mitbewegt wird, mit dem (Rotor) die an Behältertransport- und/oder -behandlungspositionen angeordneten Behälter 2 in der Blasformmaschine 3, in der Füllmaschine 4 und in der Verschließmaschine 5 transportiert werden. Die Blende 17.2 weist dann vorzugsweise nur an den Behältertransport- und/oder -behandlungspositionen dieser Maschinen oder auf diese Positionen konzentriert die den Austrittsöffnungen 18 entsprechenden Austrittsöffnungen für das sterile Fluid auf.

Die Erfindung wurde voranstehend an Ausführungsbeispielen beschrieben. Es versteht sich, dass Änderungen sowie Abwandlungen möglich sind, ohne dass dadurch der der Erfindung zugrunde liegende Erfindungsgedanke verlassen wird.

So ist es beispielsweise möglich, das Loch- oder Laminatorblech 17 lediglich in einem Teilbereich als radial verschiebbares Segment 17.1 auszubilden, wobei es dann aber erforderlich ist, den treffenden Transportstern beispielsweise für eine CIP-Reinigung und/oder Sterilisation winkelgenau so zu positionieren, dass zumindest der Überlappungs- oder Übergabebereich zwischen der zu reinigenden und/oder zu sterilisierenden Behälterbehandlungsmaschine (beispielsweise Füllmaschine) und dem Transportstern 9.5 frei von dem Laminatorblech 17 dieses Transportsternes gehalten ist.

Weiterhin besteht selbstverständlich die Möglichkeit, auch die Laminatorbleche anderer Transportsterne mit wenigstens einem bewegbaren Segment 17.1 auszubilden.

Weiterhin können anstelle der Behälterklammern 14 grundsätzlich auch andere Behälterträger verwendet sein.

### Bezugszeichenliste

- 1: Anlage
- 2: Behälter
- 2.1: Behälterhals
- 2.2: Behältermündung
- 3: Blasformmaschine
- 3.1: Behälterauslauf
- 4: Füllmaschine
- 4.1: Behältereinlauf
- 4.2: Behälterauslauf
- 5: Verschließmaschine
- 6: Transportstern
- 7: Transporteur
- 8: Behältertransportstrecke
- 8.1: Maschinengestell
- 9.1 - 9.5: Transportstern
- 10: Behältertransportstrecke
- 11: Einhausung
- 12: Säule
- 13: Rotor
- 14: Behälterklammer
- 14.1: Transportposition
- 15: Übergabebereich
- 16: Kanal
- 16.1 - 16.3: Kanalabschnitt
- 17: Blende oder Lochblech oder Laminatorblech
- 17.1: Segment
- 17.2: Blende oder Lochblech oder Laminatorblech
- 18: Öffnung
- 19: Rohr
- 20: Wandelement
- 20.1, 20.2: Wandabschnitt
- 21: Wandelement
- 21.1, 21.2: Wandabschnitt
- 22: Öffnungsanordnung
- 23: Federmittel
- 24: Betätigungselement
- 25: Mitnehmer
- 26: Ringsegment
- 27: Gestänge
- MA1 - MA5: vertikale Maschinenachse
- A: laminare Strömung
- B: Bewegungshub des Segmentes 17.1

## Patentansprüche

1. Transportstern zum Transportieren von Flaschen oder dergleichen Behältern (2) auf einer Behälterbehandlungsmaschinen oder-aggregate (3, 4, 5) verbindenden Behältertransportstrecke (8, 10), mit einem um eine vertikale Maschinenachse (MA1 - MA4) umlaufend antreibbaren rotorartigen Transportelement (13) und mit einer Vielzahl von jeweils einen Behälterträger (14) zum Halten eines Behälters (2) aufweisenden Transportpositionen (14.1) am Transportelement (13), **wobei** zur Ausbildung eines eine Kontaminierung der Behälter (2) vermeidenden Laminarströmungssystems oberhalb der Behälterträger (14) und damit oberhalb der Bewegungsbahn der an den Transportpositionen (14.1) angeordneten Behälter (2) eine Vielzahl von Austrittsöffnungen (18) für ein steriles dampf- und/oder gasförmiges Medium oder Fluid vorgesehen sind, und zwar zur Ausbildung eines Fluidstroms, beispielsweise eines Luftstromes von oben nach unten entlang einer Behälteraußenfläche der Behälter (2), **dadurch gekennzeichnet, dass** die Austrittsöffnungen (18) an einer mit dem Transportelement (13) umlaufenden Blende in Form eines Loch- oder Laminatorblechs (17) an einem Kanal (16) zum Zuführen und Verteilen des sterilen Fluids vorgesehen sind, wobei die Austrittsöffnungen (18) Gruppen (22) von jeweils mehreren Austrittsöffnungen (18) bilden und/oder die Austrittsöffnungen (18) oder deren Gruppe (22) jeweils ausschließlich über den Transportpositionen (14.1) vorgesehen sind.

2. Transportstern nach Anspruch 1, **dadurch gekennzeichnet, dass** die Austrittsöffnungen (18) der Gruppen (22) jeweils in einer Ringstruktur angeordnet sind, die eine parallel zur Maschinenachse (MA1 - MA5) orientierte Achse der Transportposition (14.1) umschließt.

3. Transportstern nach Anspruch 1 oder 2, **dadurch gekennzeichnet, dass** die Austrittsöffnungen (18) innerhalb eines sich entlang der Bewegungsbahn der Transportpositionen (14.1) erstreckenden und zu den Behälterträgern (14) hin offenen Ringraumes (16.1) vorgesehen sind, in den die an den Transportpositionen (14.1) gehaltenen Behältern (2) mit ihrer Behältermündung (2.2) hineinreichen.

4. Transportstern nach einem der vorhergehenden Ansprüche, **dadurch gekennzeichnet, dass** der Kanal (16) zum Zuführen und Verteilen des sterilen Fluids einen ersten, den Ringraum bildenden Kanalabschnitt (16.1) und daran entgegen der Strömungsrichtung des Fluids anschließenden zweiten Kanalabschnitt (16.2) für eine im Bezug auf die Maschinenachse (MA1 - MA4) radiale oder im Wesentlichen radiale Verteilung des Fluids, sowie einen dritten, vorzugsweise achsgleich mit der Maschinenachse (MA1 - MA4) angeordneten Kanalabschnitt (16.3) zum Zuführen des Fluids aufweist.

5. Transportstern nach einem der vorhergehenden Ansprüche, **dadurch gekennzeichnet, dass** der Kanal (16) zum Zuführen und Verteilen des sterilen Fluids zumindest teilweise zwischen einem ersten Wandelement (20) welches in Richtung der Maschinenachse (MA1 - MA4) von dem Transportelement (13) beabstandet ist sowie von einem zweiten Wandelement (21) gebildet ist, welches in Richtung der Maschinenachse (M1 - M4) einen gegenüber dem ersten Wandelement (20) reduzierten Abstand aufweist und mit dem Transportelement (13) umläuft oder Teil des Transportelementes (13) ist.

6. Transportstern nach Anspruch 5, **dadurch gekennzeichnet, dass** das erste Wandelement (20) mit dem Transportelement (13) nicht umlaufend an einem Maschinengestell (8.1) vorgesehen ist.

7. Transportstern nach Anspruch 5 oder 6, **dadurch gekennzeichnet, dass** das erste und/oder zweite Wandelement (20, 21) einen ersten Wandabschnitt (20.1, 21.1), der sich bezogen auf die Maschinenachse (MA1 - MA4) radial oder im Wesentlichen radial erstreckt oder kegelförmig mit seiner Kegelinnenseite in Richtung auf die Transportpositionen (14.1) orientiert ausgebildet ist, sowie wenigstens einen zweiten Wandabschnitt (20.2, 21.2) aufweisen, der an den bezogen auf die Maschinenachse (MA1 - MA4) außen liegenden Rand des ersten Wandabschnittes (20.1, 21.1) anschließt und diese Maschinenachse ringförmig umschließend ausgebildet ist, und dass zwischen den zweiten Wandabschnitten (20.2, 21.2) der die Austrittsöffnungen (18) der Blende (17) aufweisende Ringraum (16.1) gebildet ist.

8. Transportstern nach Anspruch 3, **dadurch gekennzeichnet, dass** der Ring raum (16.1) an einem Transportsterneinlauf und an einem Transportsternauslauf bezogen auf die Maschinenachse (MA1 - MA4) radial offen ist.

9. Transportstern nach einem der vorhergehenden Ansprüche, **dadurch gekennzeichnet, dass** die die Abgabeöffnungen (18) aufweisende Blende (17) für ein zumindest teilweise Entfernen aus ihrer Normalposition oberhalb der Transportpositionen (14.1) in wenigstens einem Teilbereich von einem beweglichen, von einem im Bezug auf die Maschinenachse (MA1 - MA4) verschiebbaren Segment (17.1) gebildet ist.

10. Transportstern nach Anspruch 9, **dadurch gekennzeichnet, dass** zumindest ein Behälterträger (14) zwischen einer ersten Normalposition, in der der Behälterträger (14) an der zugehörigen Transportposition (14.1) angeordnet ist, und einer zweiten Position bewegbar ist, in der sich der Behälterträger (14) außerhalb der Transportposition (14.1) befindet, wobei die Bewegung des Behälterträgers vorzugsweise zusammen mit der Bewegung des wenigstens einen Segmentes (17.1) erfolgt.

11. Behältertransportstrecke zum Transportieren von Flaschen oder dergleichen Behältern zwischen wenigstens zwei Behälterbehandlungsmaschinen oder - aggregaten (3, 4, 5), wobei die Behältertransportstrecke (8, 10) von wenigstens einem Transportstern (9.1 - 9.5) gebildet ist, **dadurch gekennzeichnet, dass** der Transportstern nach einem der vorhergehenden Ansprüche ausgebildet ist, wobei wenigstens zwei an einem Behälterübergabebereich (15) aneinander anschließende Transportsterne (9.1 - 9.5), wobei die die Austrittsöffnungen (18) bildenden Blenden (17) der in einer Behältertransportrichtung aufeinander folgenden Transportsterne (9.1 - 9.5) in Richtung der Maschinenachsen (MA1 - MA4) derart versetzt sind, so dass diese Blenden (17) an dem Behälterübergabebereich (15) mit ihren Austrittsöffnungen (18) einander überlappend vorgesehen sind, vorzugsweise deckungsgleich oder im Wesentlichen deckungsgleich.

12. Anlage zum Herstellen und/oder Behandeln von Flaschen oder dergleichen Behältern (2), mit wenigstens zwei Behälterbehandlungsmaschinen oder - aggregaten, beispielsweise in Form einer Behälterblasformmaschine (3) und einer Füllmaschine (4) oder einer Verschließmaschine (5) oder entsprechender Aggregate, und mit wenigstens einer Behältertransportstrecke (8.10) zwischen den Behälterbehandlungsmaschinen oder-aggregaten (3, 4, 5), **dadurch gekennzeichnet, dass** die wenigstens eine Behältertransportstrecke (8, 10) nach Anspruch 11 ausgebildet ist.

13. Anlage nach Anspruch 12, **dadurch gekennzeichnet, dass** sich das Laminarströmungssystem in wenigstens einer der Behälterbehandlungsmaschinen fortsetzt.

## Claims

1. Transport star for conveying bottles or like containers (2) on a container transport section (8, 10) connecting container handling machines or assemblies (3, 4, 5), comprising a rotor-like transport element (13) that can be rotationally driven around a vertical machine axis (MA1 - MA4), and comprising a plurality of transport positions (14.1) on the transport element (13), each provided with a container carrier (14) for holding a container (2), **wherein,** in order to form a laminar flow system above the container carriers (14), and thus above the trajectory of the containers (2) arranged at the transport positions (14.1), which system avoids contamination of the containers (2), a plurality of discharge openings (18) for a sterile vaporous and/or gaseous medium or fluid are provided, specifically for forming a fluid stream, an air stream from the top down along a container outer surface of the containers (2), **characterised in that** the discharge openings (18) are provided on a panel in the form of a perforated or laminator sheet (17), circulating with the transport element (13), at a channel (16) for delivering and distributing the sterile fluid, wherein the discharge openings (18) form in each case groups (22) of several discharge openings (18) and/or the discharge openings (18) or their group (22) are provided in each case exclusively above the transport positions (14.1).

2. Transport star according to claim 1, **characterised in that** the discharge openings (18) of the groups (22) are in each case arranged in a ring structure, which surrounds an axis of the transport position (14.1) oriented parallel to the machine axis (MA1-MA5).

3. Transport star according to claim 1 or 2, **characterised in that** the discharge openings (18) are provided inside a ring space (16.1) extending along the trajectory of the transport positions (14.1) and open to the container carriers (14), into which the containers (2) held at the transport positions (14.1) extend with their container mouths (2.2).

4. Transport star according to any one of the preceding claims, **characterised in that** the channel (16) for delivering and distributing the sterile fluid comprises a first channel section (16.1) forming the ring space, and a second channel section (16.2), connecting to the first against the direction of flow of the fluid, for a distribution of the fluid radially or essentially radially in relation to the machine axis (MA1-MA4), as well as a third channel section (16.3) for delivering the fluid, arranged preferably co-axially with the machine axis (MA1-MA4).

5. Transport star according to any one of the preceding claims, **characterised in that** the channel (16) for delivering and distributing the sterile fluid is formed at least partially between a first wall element (20) which is located at a distance from the transport element (13) in the direction of the machine axis (MA1-MA4), as well as formed from a second wall element (21), which exhibits a reduced distance interval from the first wall element (20), in the direction of the machine axis (M1-M4), and circulates with the transport element (13) or is a part of the transport element (13).

6. Transport star according to claim 5, **characterised in that** the first wall element (20) is provided on a machine frame (8.1), not circulating with the transport element (13).

7. Transport star according to claim 5 or 6, **characterised in that** the first and/or second wall element (20, 21) comprise a first wall section (20.1, 21.1), which is configured extended radially or essentially radially in relation to the machine axis (MA1-MA4), or oriented in conical shape with its conical inner side in the direction onto the transport positions (14.1), as well as comprising at least one second wall section (20.2, 21.2), which connects to the outside edge of the first wall section (20.1, 21.1), related to the machine axis (MA1-MA4), and is configured such as to surround this machine axis in the form of a ring, and that the ring space (16.1) exhibiting the discharge openings (18) of the sheet (17) is formed between the second wall sections (20.2, 21.2).

8. Transport star according to claim 3, **characterised in that** the ring space (16.1) is open at a transport inlet and at a transport outlet radially in relation to the machine axis (MA1-MA4).

9. Transport star according to any one of the preceding claims, **characterised in that** the sheet (17) comprising the discharge openings (18) is configured for an at least partial removal out of its normal position above the transport positions (14.1), in at least one part region, by a movable segment (17.1) which is displaceable in relation to the machine axis (MA1-MA4).

10. Transport star according to claim 9, **characterised in that** at least one container carrier (14) can be moved between a first normal position, in which the container carrier (14) is arranged at the assigned transport position (14.1), and a second position, in which the container carrier (14) is located outside the transport position (14.1), wherein the movement of the container carrier takes place preferably together with the movement of the at least one segment (17.1).

11. Container transport section for conveying bottles or like containers between at least two container handling machines or assemblies (3, 4, 5), wherein the container transport section (8, 10) is formed from at least one transport star (9.1-9.5), **characterised in that** the transport star is configured according to one of the preceding claims, wherein at least two transport stars (9.1-9.5) are connected to one another at a container transfer region (15), wherein the sheets (17) forming the discharge openings (18) of transport stars (9.1-9.5), following one another in a container transport direction, are offset in the direction of the machine axes (MA1-MA4) in such a way that these sheets (17) are provided overlapping one another with their discharge openings (18) at the container transfer region (15), preferably being congruent or essentially congruent.

12. System for producing and/or handling bottles or like containers (2), with at least two container handling machines or assemblies, for example in the form of a container blow-moulding machine (3) and a filling machine (4) or a closing machine (5) or corresponding assemblies and with at least one container transport section (8, 10) between the container handling machines or assemblies (3, 4, 5), **characterised in that** the at least one container transport section (8, 10) is configured in accordance with claim 11.

13. System according to claim 12, **characterised in that** the laminar flow system continues in at least one of the container handling machines.

## Revendications

1. Système de transport en étoile pour le transport de bouteilles ou contenants (2) similaires sur un parcours de transport de contenants (8, 10) reliant des machines ou groupes de traitement de contenants (3, 4, 5), avec un élément de transport (13) de type rotor pouvant être entraîné en rotation autour d'un axe de machine (MA1 - MA4) vertical et avec une pluralité de positions de transport (14.1) présentant respectivement un support de contenant (14) pour maintenir un contenant (2) sur l'élément de transport (13), dans lequel une pluralité d'ouvertures de sortie (18) pour un milieu ou fluide stérile sous forme de vapeur et/ou de gaz sont prévues pour la réalisation d'un système d'écoulement laminaire évitant une contamination des contenants (2) au-dessus du support de contenant (14) et donc au-dessus de la voie de déplacement des contenants (2) agencés au niveau des positions de transport (14.1), et ce pour la réalisation d'un courant de fluide, par exemple d'un courant d'air du haut vers le bas le long d'une surface extérieure de contenant des contenants (2), **caractérisé en ce que** les ouvertures de sortie (18) sont prévues au niveau d'un panneau tournant avec l'élément de transport (13) sous la forme d'une tôle perforée ou de laminage (17) au niveau d'un canal (16) pour l'amenée et la distribution du fluide stérile, dans lequel les ouvertures de sortie (18) forment des groupes (22) de respectivement plusieurs ouvertures de sortie (18) et/ou les ouvertures de sortie (18) ou leur groupe (22) sont prévues respectivement exclusivement au-dessus des positions de transport (14.1).

2. Système de transport en étoile selon la revendication 1, **caractérisé en ce que** les ouvertures de sortie (18) des groupes (22) sont agencées respectivement dans une structure annulaire, qui entoure un axe de la position de transport (14.1) orienté parallèlement à l'axe de machine (MA1 - MA5).

3. Système de transport en étoile selon la revendication 1 ou 2, caractérisé que les ouvertures de sortie (18) sont prévues à l'intérieur d'un espace annulaire (16.1) ouvert vers les supports de contenant (14) et s'étendant le long de la voie de déplacement des positions de transport (14.1), dans lequel les contenants (2) maintenus au niveau des positions de transport (14.1) pénètrent avec leur embouchure de contenant (2.2).

4. Système de transport en étoile selon l'une quelconque des revendications précédentes, **caractérisé en ce que** le canal (16) présente pour l'amenée et la distribution du fluide stérile une première section de canal (16.1) formant l'espace annulaire et une deuxième section de canal (16.2) s'y raccordant dans le sens opposé à la direction d'écoulement du fluide pour une distribution du fluide radiale par rapport à l'axe de machine (MA1 - MA4) ou sensiblement radiale, ainsi qu'une troisième section de canal (16.3) agencée de préférence sur le même axe que l'axe de machine (MA1 - MA4) pour l'amenée du fluide.

5. Système de transport en étoile selon l'une quelconque des revendications précédentes, **caractérisé en ce que** le canal (16) pour l'amenée et la distribution du fluide stérile présente au moins en partie entre un premier élément de paroi (20) lequel est espacé de l'élément de transport (13) en direction de l'axe de machine (MA1 - MA4) ainsi que formé d'un deuxième élément de paroi (21), lequel présente une distance réduite par rapport au premier élément de paroi (20) en direction de l'axe de machine (M1 - M4) et tourne avec l'élément de transport (13) ou fait partie de l'élément de transport (13).

6. Système de transport en étoile selon la revendication 5, **caractérisé en ce que** le premier élément de paroi (20) est prévu non rotatif avec l'élément de transport (13) au niveau d'un châssis de machine (8.1).

7. Système de transport en étoile selon la revendication 5 ou 6, **caractérisé en ce que** le premier et/ou deuxième élément de paroi (20, 21) présente une première section de paroi (20.1, 21.1) qui s'étend radialement par rapport à l'axe de machine (MA1 - MA4) ou sensiblement radialement ou est réalisée de manière conique avec son côté intérieur de cône orienté en direction des positions de transport (14.1), ainsi qu'au moins une deuxième section de paroi (20.2, 21.2), qui se raccorde au bord de la première section de paroi (20.1, 21.1) situé à l'extérieur par rapport à l'axe de machine (MA1 - MA4) et est réalisée de façon entourer cet axe de machine de manière annulaire, et que l'espace annulaire (16.1) présentant les ouvertures de sortie (18) du panneau (17) est formé entre les deuxièmes sections de paroi (20.2, 21.2).

8. Système de transport en étoile selon la revendication 3, **caractérisé en ce que** l'espace annulaire (16.1) est radialement ouvert au niveau d'une entrée du système de transport en étoile et au niveau d'une sortie du système de transport en étoile par rapport à l'axe de la machine (MA1 - MA4).

9. Système de transport en étoile selon l'une quelconque des revendications précédentes, **caractérisé en ce que** le panneau (17) présentant les ouvertures de sortie (18) est formé d'un segment (17.1) mobile, déplaçable par rapport à l'axe de machine (MA1 - MA4) pour un retrait au moins partiel de sa position normale au-dessus des positions de transport (14.1) dans au moins une zone partielle.

10. Système de transport en étoile selon la revendication 9, **caractérisé en ce qu'**au moins un support de contenant (14) est déplaçable entre une première position normale, dans laquelle le support de contenant (14) est agencé au niveau de la position de transport (14.1) correspondante et une deuxième position, dans laquelle le support de contenant (14) se trouve en dehors de la position de transport (14.1), dans lequel le déplacement du support de contenant se fait de préférence conjointement avec le déplacement de l'au moins un segment (17.1).

11. Parcours de transport de contenants pour le transport de bouteilles ou contenants similaires entre au moins deux machines ou groupes de traitement de contenants (3, 4, 5), dans lequel le parcours de transport de contenants (8, 10) est formé d'au moins un système de transport en étoile (9.1 - 9.5), **caractérisé en ce que** le système de transport en étoile est réalisé selon l'une quelconque des revendications précédentes, dans lequel au moins deux systèmes de transport en étoile (9.1 - 9.5) se raccordant l'un à l'autre au niveau d'une zone de transfert de contenant (15), dans lequel les panneaux (17) formant les ouvertures de sortie (18) des systèmes de transport en étoile (9.1 - 9.5) se suivant l'un l'autre dans une direction de transport de contenants sont décalés en direction des axes de machine (MA1 - MA4) de telle manière que ces panneaux (17) sont prévus au niveau de la zone de transfert de contenant (15) avec leurs ouvertures de sortie (18) se chevauchant l'une l'autre, de préférence de manière coïncidente ou de manière sensiblement coïncidente.

12. Installation de fabrication et/ou de traitement de bouteilles ou contenants (2) similaires, avec au moins deux machines ou groupes de traitement de contenants, par exemple sous forme de machine de moulage par soufflage de contenants (3) et de machine de remplissage (4) ou de machine de scellage (5) ou de groupes correspondants, et avec au moins un parcours de transport de contenants (8, 10) entre les machines ou groupes de traitement de contenants (3, 4, 5), **caractérisée en ce que** l'au moins un parcours de transport de contenants (8, 10) est réalisé selon la revendication 11.

13. Installation selon la revendication 12, **caractérisée en ce que** le système d'écoulement laminaire se poursuit dans au moins une des machines de traitement de contenants.
